# DEMANDE DE BREVET EUROPEEN

(11) **EP 1 519 516 A2**
(43) Date de publication de la demande: **30.03.2005**
(21) Numéro de dépôt: 04021990.9
(22) Date de dépôt: 16.09.2004
(51) Int. Cl.: H04L 12/28

(54) **Procédé d'établissement d'un transfert de données entre deux dispositifs de communication et dispositif associé**

(30) Priorité: 23.09.2003 FR 0350590
(71) Demandeur: FRANCE TELECOM, 75015 Paris (FR)
(72) Inventeur: Herledan, Frédéric, 38240 Meylan (FR); Provost, Hervé, 38170 Seyssinet-Pariset (FR)
(74) Mandataire: Jeune, Pascale

(57) **Abrégé**

La présente invention se rapporte à un procédé (1) d'établissement d'un transfert de données entre deux dispositifs de communication et aux dispositifs de communication pour l'établissement d'un tel transfert. Les dispositifs sont reliés chacun à un réseau IP et à un réseau analogique par une ligne d'abonné sur laquelle transitent un canal de signalisation et de parole et un canal de données. Le procédé (1) consiste à émettre (4) l'adresse IP d'un des dispositifs sur le canal de signalisation et de parole en utilisant un mode de signalisation du canal, vers l'autre dispositif. Le transfert de données s'effectue après établissement d'une session sur le canal de données.

## Description

La présente invention se rapporte au domaine des télécommunications et, dans ce domaine, aux procédés d'établissement d'un transfert de données entre deux dispositifs de communication reliés entre eux par un réseau de télécommunication et aux dispositifs de communication pour l'établissement d'un tel transfert. La partie terminale du réseau en liaison avec un dispositif de communication est dite ligne d'abonné. Ces procédés d'établissement d'un transfert de données interviennent en particulier lors de l'établissement d'une visioconférence entre deux ordinateurs reliés entre eux par un réseau de télécommunication. Dans la suite de la demande, le terme réseau désigne aussi bien plusieurs segments d'un même réseau, qu'un ensemble de segments appartenant à différents réseaux interconnectés entre eux et formant une toile pouvant notamment mettre en oeuvre un réseau téléphonique commuté, ou RTC en abrégé, ainsi que des réseaux de transmission par mode paquets, par opposition au mode commuté, dont le réseau TCP/IP communément appelé Internet est un exemple. TCP, abréviation des termes anglo-saxons Transmission Control Protocol, est un protocole en mode connecté de niveau 4 (transport) utilisé sur l'Internet au-dessus du protocole IP qui est l'abréviation des termes anglo-saxons Internet Protocol. Il existe d'autres réseaux qui utilisent le protocole IP, en particulier tout réseau UDP/IP, UDP étant l'abréviation des termes anglo-saxons User Datagran Protocol. UDP est un protocole en mode non connecté de niveau 4 (transport) utilisé sur l'Internet au-dessus du protocole IP. Dans la suite de la demande un réseau utilisant le protocole IP sera dit réseau IP. On entend par une ligne d'abonné, une ligne de télécommunication établie au moyen soit d'un réseau sans fil, soit d'un réseau fixe. Dans chacun de ces cas la ligne d'abonné est identifiée par le numéro de téléphone attribué à l'entité qui paie l'abonnement de cette ligne.

Les systèmes de visioconférence connus sont de deux catégories.

Une première catégorie regroupe les systèmes professionnels point à point ou multipoints. Ces systèmes utilisent un réseau téléphonique numérique tel que RNIS et mettent en oeuvre la norme H320. Ils permettent aux utilisateurs de se contacter en utilisant leur numéro d'abonné téléphonique. Ces systèmes sont limités par la capacité d'une ligne RNIS qui est au maximum de deux fois 64kbits/s. Il est possible de coupler plusieurs lignes RNIS pour augmenter la capacité mais ceci entraîne une augmentation du coût d'utilisation du système.

Une seconde catégorie regroupe les systèmes grand-public sur Internet mettant par exemple en oeuvre la norme H323. Ces systèmes tirent partie de la grande capacité des offres des fournisseurs d'accès à Internet, FAI en abrégé. Ces offres permettent d'obtenir avec la technologie ADSL des capacités de 64kbits/s dans le sens montant et de 128kbits/s dans le sens descendant, voire respectivement 256kbits/s et 1024kbits/s. Les procédés mis en oeuvre par ces systèmes permettent une très belle qualité d'image et de son mais ils présentent des inconvénients. Un des plus importants est que leur débit n'est pas garanti. Par contre, ces offres étant basées sur un accès forfaitaire à l'Internet, la communication ne coûte rien à l'utilisateur. En outre, ces procédés mis en oeuvre par un ordinateur imposent à l'utilisateur la connaissance du fonctionnement technique sous-jacent d'identification d'ordinateur sur Internet et plus généralement sur réseau IP. L'obtention d'une adresse IP fixe qui permet d'identifier un ordinateur de façon permanente est une opération onéreuse pour une personne du grand public. Ceci entraîne le recours aux adresses IP temporaires ; l'utilisateur obtient une adresse IP temporaire octroyée par le fournisseur d'accès. Non seulement cette adresse est temporaire, mais en outre elle est octroyée pour un laps de temps non connu de l'utilisateur ce qui se traduit par un retrait unilatéral décidé par le FAI au bout de ce laps de temps. Bien que l'utilisateur puisse solliciter immédiatement une autre adresse IP et l'obtenir rapidement, ce retrait sans préavis interrompt brutalement toute visioconférence en cours.

Les utilisateurs qui souhaitent se connecter entre eux par visioconférence sur IP peuvent se simplifier la tâche en faisant appel à des annuaires des domaines Internet dynamiques, DNS dynamiques en abrégé. Ces DNS dynamiques permettent de connaître la dernière adresse IP affectée à un ordinateur à condition de connaître le nom symbolique donné à cet ordinateur. Ce procédé permet ainsi de récupérer l'adresse IP de l'ordinateur avec lequel la visioconférence doit être établie en interrogeant un DNS dynamique. Toutefois, il présente certains inconvénients qui sont les suivants. D'une part, l'utilisateur doit connaître les adresses des DNS dynamiques. D'autre part, chaque ordinateur doit se déclarer auprès du ou des DNS dynamiques pour que celui-ci puisse l'identifier. Par ailleurs, l'utilisateur doit connaître le nom symbolique de l'ordinateur avec lequel il veut se connecter en visioconférence. En outre, les DNS dynamiques doivent être disponibles pour que les utilisateurs puissent les interroger. Enfin, ce procédé nécessite un équipement intermédiaire pour l'établissement d'une visioconférence entre deux ordinateurs.

L'invention a pour objectif de pallier les inconvénients des techniques connues d'établissement d'un transfert de données entre un premier et un deuxième dispositifs au moyen d'un réseau de télécommunication comprenant un réseau IP. En particulier, l'invention a pour but de permettre une relance plus facile d'une session entre deux dispositifs pour le rétablissement d'une visioconférence interrompue entre ces dispositifs consécutivement au changement d'adresse IP de l'un de ces dispositifs.

A cette fin, l'invention a pour objet un procédé d'établissement d'un transfert de données entre un premier et un deuxième dispositifs de communication reliés entre eux au moyen d'un réseau de télécommunication comprenant un réseau IP. Le premier dispositif est équipé d'au moins un moyen logiciel d'émission/réception de données transmises par le réseau, d'un premier moyen d'interface réseau relié à une ligne d'abonné du réseau de télécommunication sur laquelle transite un canal de signalisation et d'un deuxième moyen d'interface réseau relié à une ligne d'abonné du réseau de télécommunication sur laquelle transite un canal de données. Le procédé comprend l'étape qui consiste en ce que le premier dispositif émet son adresse IP à destination du deuxième dispositif au moyen du canal de signalisation en utilisant un mode de signalisation spécifique.

En outre, l'invention a pour objet un dispositif de communication pour l'établissement d'un transfert de données avec un autre dispositif de communication. Le dispositif est équipé d'au moins un logiciel d'émission/réception de données, d'un premier moyen d'interface réseau et d'un deuxième moyen d'interface réseau. Chacun des deux moyens d'interface réseau est relié à une même ligne d'abonné sur laquelle transitent respectivement un canal de signalisation et un canal de données séparés par un filtre respectivement vers le premier moyen d'interface réseau et vers le deuxième moyen d'interface réseau. Le dispositif comprend des moyens logiciels pour le déroulement de l'étape qui consiste en ce que le dispositif émet son adresse IP à destination de l'autre dispositif au moyen du canal de signalisation en utilisant un mode de signalisation spécifique.

Ainsi, l'utilisation d'un mode de signalisation déterminé empruntant un canal de signalisation permet au premier dispositif d'émettre son adresse IP à destination du deuxième dispositif. Ce dernier peut ensuite appeler le premier dispositif connaissant son adresse IP.

Par conséquent, un procédé et un dispositif selon l'invention limitent l'intervention des utilisateurs dans le processus de récupération des adresses IP des dispositifs correspondants et limite par conséquent les difficultés que les utilisateurs peuvent rencontrer dans la relance d'une session.

Selon une réalisation particulière du dispositif précédent les moyens logiciels sont en outre adaptés pour le déroulement des étapes préalables qui consistent :
- en ce que le dispositif se connecte par l'intermédiaire du canal de données à un réseau IP via un fournisseur d'accès,
- en ce que le dispositif enregistre l'adresse dynamique fournie par le fournisseur d'accès auquel il est connecté,
et de l'étape qui consiste :
- en ce que le dispositif se met en attente sur le canal de données d'un appel de l'autre dispositif, appel adressé au moyen de l'adresse IP du dispositif dont dispose l'autre dispositif.

Après l'émission de son adresse IP, le premier dispositif se met préférentiellement en attente sur le canal de données d'un appel du deuxième dispositif, cet appel étant adressé au moyen de l'adresse IP du premier dispositif dont dispose le deuxième dispositif. Ce mode préférentiel permet de sécuriser l'émission/réception de données en refusant par exemple tout autre appel que celui émanant du deuxième dispositif.

L'invention a en outre pour objet un procédé d'établissement d'un transfert de données entre un premier et un deuxième dispositifs de communication. Le premier dispositif est équipé d'au moins un moyen logiciel d'émission/réception de données, d'un premier moyen d'interface réseau relié à une ligne d'abonné du réseau de télécommunication sur laquelle transite un canal de signalisation et d'un deuxième moyen d'interface réseau relié à une ligne d'abonné du réseau de télécommunication sur laquelle transite un canal de données. Chaque ligne d'abonné est reliée à un réseau IP comprenant un annuaire IP qui identifie un dispositif par son numéro de téléphone selon la norme ENUM. Le procédé comprend les étapes qui consistent :
- en ce que le premier dispositif se connecte par l'intermédiaire du canal de données à un réseau IP via un fournisseur d'accès,
- en ce que le premier dispositif enregistre l'adresse dynamique fournie par le fournisseur d'accès auquel il est connecté et inscrit cette adresse dans l'annuaire,
- en ce que le premier dispositif appelle le deuxième dispositif sur le canal de signalisation pour déclencher l'interrogation de l'annuaire par le deuxième dispositif et la lecture par ce dernier de l'adresse IP du premier dispositif,
- en ce que le premier dispositif se met en attente sur le canal de données d'un appel du deuxième dispositif, appel adressé au moyen de l'adresse IP du premier dispositif lue dans l'annuaire par le deuxième dispositif.

Selon ce mode, l'adresse IP du premier dispositif est émise de manière indirecte à destination du deuxième dispositif au moyen d'un canal de signalisation.

L'invention a en outre pour objet un procédé d'établissement d'un transfert de données entre un premier et un deuxième dispositifs de communication. Chacun des deux dispositifs est équipé d'au moins un moyen logiciel d'émission/réception de données, d'un premier moyen d'interface réseau relié à une ligne d'abonné du réseau de télécommunication sur laquelle transite un canal de signalisation et d'un deuxième moyen d'interface réseau relié à une ligne d'abonné du réseau de télécommunication sur laquelle transite un canal de données. Le procédé comprend les étapes qui consistent :
- en ce que le premier dispositif se connecte par l'intermédiaire de son canal de données à un réseau IP via un fournisseur d'accès,
- en ce que le premier dispositif enregistre l'adresse dynamique fournie par le fournisseur d'accès auquel il est connecté,
- en ce que le premier dispositif émet son adresse IP à destination du deuxième dispositif au moyen de son canal de signalisation en utilisant un mode de signalisation spécifique et,
en réponse à l'émission de l'adresse IP du premier dispositif à destination du deuxième dispositif :
- en ce que le deuxième dispositif se connecte par l'intermédiaire de son canal de données à un réseau IP via un fournisseur d'accès,
- en ce que le deuxième dispositif enregistre l'adresse dynamique fournie par le fournisseur d'accès auquel il est connecté,
- en ce que le deuxième dispositif émet son adresse IP à destination du premier dispositif au moyen de son canal de signalisation en utilisant un mode de signalisation spécifique et
- en ce que le premier dispositif émet sur son canal de données, à la demande de son moyen logiciel d'émission/réception de données, un appel adressé au deuxième dispositif au moyen de l'adresse IP de ce dernier dispositif.

L'invention a en outre pour objet un procédé d'établissement d'un transfert de données entre un premier et un deuxième dispositifs de communication. Chacun des deux dispositifs est équipé d'au moins un moyen logiciel d'émission/réception de données, d'un premier moyen d'interface réseau relié à une ligne d'abonné du réseau de télécommunication sur laquelle transite un canal de signalisation et d'un deuxième moyen d'interface réseau relié à une ligne d'abonné du réseau de télécommunication sur laquelle transite un canal de données. Le procédé comprend les étapes qui consistent :
- en ce que chacun des deux dispositifs se connecte par l'intermédiaire de son canal de données à un réseau IP via un fournisseur d'accès,
- en ce que chacun des deux dispositifs enregistre l'adresse dynamique fournie par le fournisseur d'accès auquel il est connecté,
- en ce que chacun des deux dispositifs échange avec l'autre dispositif son adresse IP au moyen de son canal de signalisation en utilisant un mode de signalisation spécifique et
- en ce que le premier dispositif émet sur son canal de données, à la demande de son moyen logiciel d'émission/réception de données, un appel adressé au deuxième dispositif au moyen de l'adresse IP de ce dernier dispositif.

Les moyens d'interface réseau effectuent l'adaptation des signaux transmis par le réseau entre le dispositif et le réseau. Dans le cas où la (les) ligne(s) d'abonné du dispositif fait (font) partie d'un réseau RTC couplé à une offre xDSL, les moyens d'interface réseau sont des modems.

L'invention est mise en oeuvre aussi bien dans un contexte de réseau fixe avec des offres xDSL, que dans un contexte de réseau mobile. En particulier, la norme GPRS définit plusieurs canaux dont un canal numérique voix bas débit qui peut servir en particulier de canal de signalisation et des canaux haut débit destinés à la transmission de données IP. En outre, que le réseau soit fixe ou mobile, l'invention peut être mise en oeuvre avec tout réseau de données IP et pas seulement avec un réseau couplé à des offres xDSL.

Ainsi la ligne d'abonné peut faire partie de différents types de réseau.

Dans le cas d'un réseau analogique, l'émission d'adresse IP est effectuée par l'utilisation de fréquences vocales en mode DTMF dans une voie de parole du canal de signalisation. En particulier, l'adresse IP composée d'une série de chiffres est transmise en mode DTMF sous la forme d'une séquence de doubles tonalités résultantes de la traduction en double fréquence de chaque chiffre.

Cependant, dans le cas d'un réseau analogique (PSTN) ayant une fonction présentation du numéro et du nom, l'émission d'adresse IP peut être effectuée par l'utilisation d'un mode de signalisation analogique de présentation du numéro et du nom.

Dans le cas d'un réseau numérique (ISDN), l'émission d'adresse IP est effectuée par l'utilisation d'un mode de signalisation du canal D. En particulier, l'adresse IP composée d'une série de chiffres est émise dans le mode de signalisation Q931 en substitution du numéro de l'installation de l'abonné appelant.

Le procédé selon l'invention peut être utilisé pour différents types d'échange de données. Parmi les différentes utilisations, on distingue les utilisations pour de la visioconférence, les utilisations pour du transfert de fichiers entre deux dispositifs, suivant par exemple le protocole FTP abréviations des termes File Transfer Protocol.

De manière complémentaire à l'émission d'adresse IP, le procédé peut en outre émettre une indication du service distant qu'il souhaite activer. A cette fin, il peut être fait appel à un mécanisme similaire à celui des ports IP normalisés : le premier dispositif émet un code en complément de son adresse IP. Par exemple, l'utilisation d'un code 21 signifie que le dispositif souhaite un transfert de fichier suivant le protocole FTP.

La ligne d'abonné peut être commune aux deux moyens d'interface réseau ou différente pour chacun des deux moyens d'interface réseau. Dans le cas où la ligne d'abonné est commune aux deux moyens d'interface réseau, le canal de signalisation et le canal de données transitent sur cette même ligne d'abonné et sont séparés par un filtre respectivement vers le premier moyen d'interface réseau et vers le deuxième moyen d'interface réseau. Dans le cas où la ligne d'abonné est différente pour chacun des deux moyens d'interface réseau, le canal de signalisation transite sur la ligne d'abonné reliée au premier moyen d'interface réseau et le canal de données transite sur la ligne d'abonné reliée au deuxième moyen d'interface réseau.

Quel que soit le mode de réalisation, un procédé d'établissement selon l'invention peut démarrer automatiquement lors de la mise en route du dispositif sur lequel se déroule le procédé ou être déclenché par une action extérieure. L'action extérieure peut consister en une activation d'une interface utilisateur du dispositif. En outre, l'émission par le premier dispositif de son adresse IP peut être enchaînée automatiquement après l'enregistrement de son adresse IP ou être déclenchée par une action extérieure. Une telle action peut consister en la numérotation du numéro d'abonné du deuxième dispositif sur un poste téléphonique relié d'une part au premier dispositif et d'autre part à la ligne d'abonné du premier dispositif, le numéro composé étant détecté par le premier dispositif.

Un dispositif de communication selon l'invention est typiquement un ordinateur personnel. Cependant il peut prendre d'autres formes et se présenter sous la forme d'un assistant numérique personnel ou PDA(Personnel Digital Assistant) ou sous toute autre forme qui incorpore les moyens nécessaires pour le déroulement d'un procédé selon l'invention.

D'autres caractéristiques et avantages de l'invention apparaîtront lors de la description qui suit, faite en regard de figures annexées données à titre d'exemples non limitatifs.

La figure 1 est un organigramme d'une mise en oeuvre particulière d'un procédé selon l'invention.

La figure 2 est un schéma d'une première réalisation d'un procédé d'établissement d'un transfert de données selon l'invention, dans le cas d'une utilisation pour l'établissement d'une visioconférence.

La figure 3 est un schéma d'une deuxième réalisation d'un procédé d'établissement d'un transfert de données selon l'invention, dans le cas d'une utilisation pour l'établissement d'une visioconférence.

La figure 4 est un schéma d'une troisième réalisation d'un procédé d'établissement d'un transfert de données selon l'invention, dans le cas d'une utilisation pour l'établissement d'une visioconférence.

La figure 5 est un schéma d'une réalisation particulière d'un dispositif de communication selon l'invention.

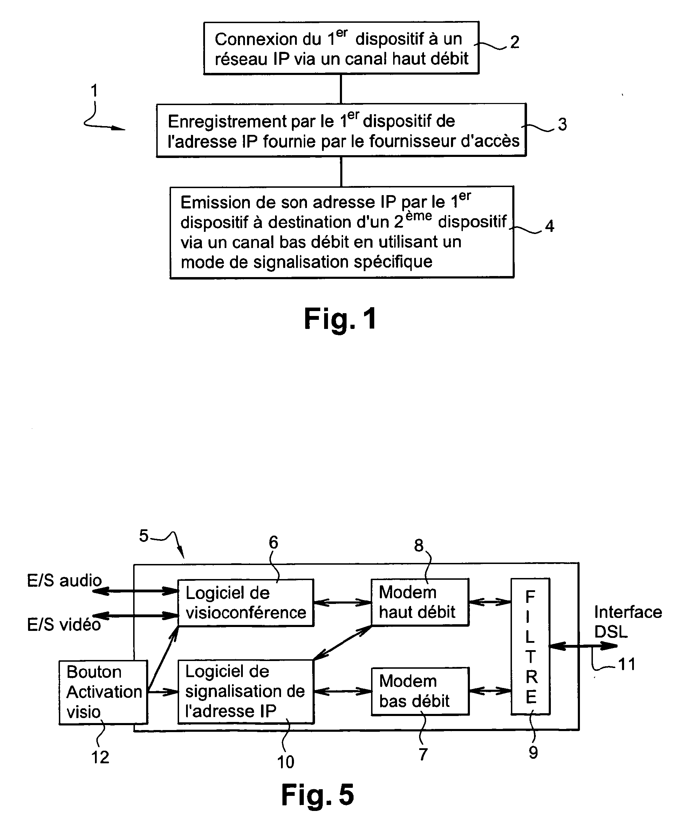

La figure 1 représente un organigramme d'une mise en oeuvre particulière d'un procédé d'établissement d'un transfert de données selon l'invention. Selon l'exemple retenu, le procédé est utilisé pour l'établissement d'une visioconférence entre un premier et un deuxième dispositifs au moyen d'un réseau IP qui correspond au réseau Internet. Le premier dispositif est équipé d'un logiciel de visioconférence, d'un modem bas débit et d'un modem haut débit. Chacun des deux modems est relié à une même ligne d'abonné sur laquelle transitent respectivement un canal bas débit et un canal haut débit séparés par un filtre respectivement vers le modem bas débit et vers le modem haut débit.

Le procédé 1 comprend plusieurs étapes décrites ci-après.

Dans une première étape, le premier dispositif se connecte 2 par l'intermédiaire de son canal haut débit au réseau Internet via un fournisseur d'accès.

Dans une deuxième étape, le premier dispositif enregistre 3 l'adresse IP dynamique fournie par le fournisseur d'accès auquel il est connecté.

Dans une troisième étape, le premier dispositif émet 4 son adresse IP à destination du deuxième dispositif au moyen du canal de signalisation en utilisant un mode de signalisation spécifique. Le premier dispositif peut émettre avec son adresse IP le code 1720 pour signifier au deuxième dispositif qu'il veut établir une visioconférence.

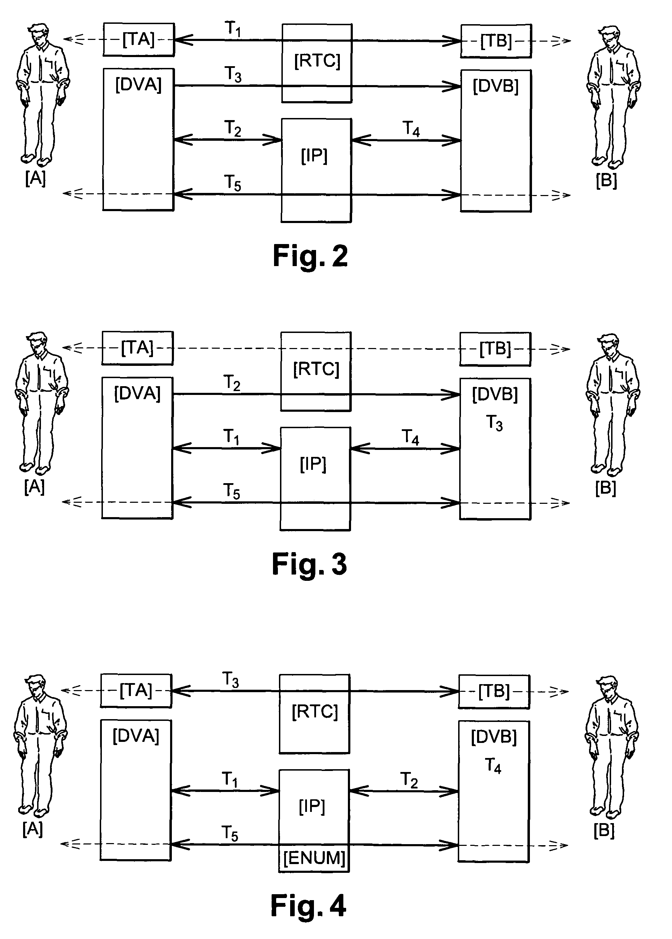

La figure 2 est un schéma d'une première réalisation d'un procédé selon l'invention d'établissement d'un transfert de données utilisé pour l'établissement d'une visioconférence.

Selon cette réalisation deux utilisateurs A et B établissent une première conversation téléphonique et, au cours de leur conversation, ils décident de poursuivre par le biais d'une visioconférence.

Chaque utilisateur A, B dispose d'un ordinateur DVA, DVB et d'un poste téléphonique TA, TB. Pour chacun des utilisateurs A, respectivement B, le poste téléphonique TA, respectivement TB, est relié à un réseau téléphonique commuté RTC au moyen d'une ligne d'abonné de type xDSL. L'ordinateur DVA, respectivement DVB, est relié à un réseau IP, Internet selon l'exemple, au moyen de la même ligne d'abonné que celle du poste téléphonique TA, respectivement TB, et par l'intermédiaire d'un fournisseur d'accès FAI_A, respectivement FAI_B. Sur la ligne d'abonné de chacun des utilisateurs A et B transitent un canal bas débit ou voie de parole et de signalisation et un canal haut débit ou voie de données.

Dans un premier temps T1, l'utilisateur A appelle son correspondant B au moyen de son combiné téléphonique TA. L'appel emprunte le canal bas débit de sa ligne d'abonné. L'utilisateur A compose le numéro de téléphone du correspondant B sur son combiné téléphonique TA. Après que le correspondant B a décroché, l'utilisateur A dialogue en phonie avec son correspondant B.

Dans un deuxième temps T2, les utilisateurs A et B décident de poursuivre en visioconférence. L'utilisateur A clique sur un bouton d'activation du logiciel de visioconférence installé sur son ordinateur DVA. Cette action déclenche la connexion de l'ordinateur DVA au réseau Internet via le canal haut débit de sa ligne d'abonné. Cette connexion s'effectue par l'intermédiaire du fournisseur d'accès FAI_A de l'utilisateur A. Le fournisseur d'accès FAI_A attribue une adresse IP dynamique à l'ordinateur DVA. L'ordinateur DVA enregistre cette adresse IP.

Dans un troisième temps T3, l'ordinateur DVA émet son adresse IP à destination de l'ordinateur de B. Cette adresse est émise par l'ordinateur DVA via le canal bas débit de la ligne d'abonné de l'utilisateur A. L'émission est effectuée en utilisant des fréquences vocales DTMF dans la voie de parole. Ainsi, l'adresse IP v4 qui est composée de quatre ensembles de trois digits est émise sous la forme d'une séquence de douze doubles tonalités.

Vu du côté de l'utilisateur B, la réception par l'ordinateur DVB de l'adresse IP de l'utilisateur A peut s'effectuer au moyen d'un autre mode de signalisation. En particulier, ce mode de signalisation est lié au type de réseau dont fait partie la ligne d'abonné de l'utilisateur B. Par exemple, si l'utilisateur B a une ligne d'abonné qui fait partie d'un réseau numérique, alors l'adresse IP peut être véhiculée au moyen d'un mode de signalisation du canal D.

Dans un quatrième temps T4, l'ordinateur DVB de l'utilisateur B se connecte au réseau Internet en empruntant le canal haut débit de sa ligne d'abonné. Cette connexion fait suite à la réception sur le canal bas débit de l'adresse IP de l'utilisateur A et s'effectue par l'intermédiaire du fournisseur d'accès FAI_B de l'utilisateur B. Le fournisseur d'accès FAI_B attribue une adresse IP dynamique à l'ordinateur DVB. L'ordinateur DVB enregistre cette adresse IP.

Dans un cinquième temps T5, l'ordinateur DVB émet un appel pour une visioconférence à destination de l'ordinateur DVA en empruntant le canal haut débit de sa ligne d'abonné. Cet appel est adressé en utilisant l'adresse IP de l'ordinateur DVA.

Une fois la visioconférence établie, les utilisateurs A et B peuvent communiquer sur leur canal haut débit et mettre fin à leur conversation téléphonique. Cependant si les deux utilisateurs veulent optimiser le débit réel disponible sur le lien IP, ils peuvent poursuivre la communication téléphonique et ne pas activer les codeurs/décodeurs audio pilotés par le logiciel de visioconférence. Une telle configuration permet d'obtenir le maximum de qualité et de fluidité pour le débit disponible.

En cas de rupture soudaine de la session de visioconférence consécutive à un changement d'adresse IP ou à une déconnexion unilatérale du fait d'un des fournisseurs d'accès FAI_A ou FAI_B, le procédé peut être relancé automatiquement ou manuellement. Une relance automatique ou manuelle relance le processus à partir de la deuxième phase. Cependant dans le cas d'une relance manuelle de la part d'un des utilisateurs ou des deux utilisateurs indépendamment l'un de l'autre, les utilisateurs peuvent choisir de s'appeler en phonie dans un premier temps. La relance peut être automatique car le dispositif déconnecté peut diagnostiquer de manière connue en soi l'origine de cette rupture.

Une déconnexion unilatérale du fait d'un fournisseur d'accès est désignée par le terme drop en langage anglo-saxon. Pour exemple, il existe des offres ADSL pour lesquelles ce drop a lieu toutes les vingt quatre heures ou toutes les semaines. La souscription d'un service d'adresse IP fixe n'évite pas le drop. Toutefois à chaque connexion, après un drop par exemple, l'adresse IP donnée par le fournisseur d'accès reste toujours la même.

La figure 3 est un schéma d'une deuxième réalisation d'un procédé d'établissement d'un transfert de données selon l'invention, dans le cas d'une utilisation pour l'établissement d'une visioconférence.

Chaque utilisateur A, B dispose d'un ordinateur DVA, DVB et d'un poste téléphonique TA, TB. Pour chaque utilisateur A, respectivement B, le poste téléphonique TA, respectivement TB, est relié à un réseau téléphonique commuté RTC au moyen d'une ligne d'abonné de type xDSL. L'ordinateur DVA, respectivement DVB, est relié au réseau Internet, au moyen de la même ligne d'abonné que celle du poste téléphonique TA, respectivement TB, et par l'intermédiaire d'un fournisseur d'accès FAI_A, respectivement FAI_B. Sur chaque ligne d'abonné transitent un canal bas débit ou voie de parole et de signalisation et un canal haut débit ou voie de données.

Dans un premier temps T1, à sa mise en route, l'ordinateur DVA de l'utilisateur A, se connecte au réseau Internet via le canal haut débit de sa ligne d'abonné. Cette connexion s'effectue par l'intermédiaire du fournisseur d'accès FAI_A de l'utilisateur A. Le fournisseur d'accès FAI_A attribue une adresse IP dynamique à l'ordinateur DVA. L'ordinateur DVA enregistre cette adresse IP.

Dans un deuxième temps T2, l'ordinateur DVA émet son adresse IP à destination de l'ordinateur DVB de l'utilisateur B. Cette adresse est émise par l'ordinateur DVA via le canal bas débit de la ligne d'abonné de l'utilisateur A. Pour adresser le correspondant de l'utilisateur A, l'ordinateur DVA peut demander la saisie par l'utilisateur A du numéro de téléphone de l'utilisateur B. Ce numéro peut éventuellement être une valeur par défaut enregistrée par l'ordinateur DVA. Selon une variante, la composition du numéro téléphonique de l'utilisateur B peut être effectuée sur le poste téléphonique TA de l'utilisateur A. Ceci suppose que l'ordinateur DVA a les moyens de détecter le décrochage et de lire le numéro composé. Dans ce cas l'ordinateur DVA déclenche l'émission de son adresse IP en utilisant le numéro lu. L'émission de l'adresse IP est effectuée au moyen d'un mode de signalisation. Comme décrit en regard de la figure 2, l'émission peut être effectuée en utilisant des fréquences vocales DTMF dans la voie de parole dans le cas d'un réseau analogique du type RTC. Dans le cas d'un réseau analogique du type PSTN, le mode de signalisation utilisé peut être la signalisation analogique de présentation du numéro et du nom. Ainsi, par une adaptation du traitement d'appel effectué au sein du réseau, l'ordinateur DVA appelle le numéro de téléphone de l'ordinateur DVB et transmet simultanément sa propre adresse IP dynamique par exemple par sur-numérotation. Dans le cas d'un réseau numérique du type RNIS, l'adresse IP peut être véhiculée au moyen d'un mode de signalisation du canal D. Ainsi, l'adresse IP peut être émise dans la signalisation en substitution du numéro de l'installation d'abonné ou SDN abréviation des termes anglo-saxons Supplementary Désignation Number.

Dans un troisième temps T3, l'ordinateur DVB reçoit via le canal bas débit de sa ligne d'abonné, l'appel téléphonique de l'ordinateur DVA avec, dans la signalisation téléphonique, l'indication du numéro téléphonique appelant ainsi que l'adresse IP dynamique de l'ordinateur DVA. L'ordinateur DVB peut déclencher une alerte pour prévenir l'utilisateur B d'une demande d'appel de visioconférence. L'utilisateur B peut choisir entre :
- répondre en vocal en décrochant son poste téléphonique TB. La communication s'effectue alors uniquement en phonie.
- répondre à la demande de visioconférence. Il active alors l'acceptation de visioconférence en cliquant par exemple sur un bouton d'activation du logiciel de visioconférence installé sur son ordinateur DVB. Dans ce cas, l'ordinateur DVB ne répond pas à l'appel sur le canal bas débit. Selon une variante, le logiciel de visioconférence installé sur l'ordinateur DVB peut être équipé d'un bouton qui permet de limiter l'usage de la visioconférence à l'échange de parole ce qui revient à de la téléphonie sur IP. Cette variante peut être combinée avec un autre bouton qui permet d'établir un échange d'images et de se placer dans une configuration de visioconférence avec échange d'images et de données audio.

Dans un quatrième temps T4, l'ordinateur DVB de l'utilisateur B se connecte au réseau Internet en empruntant le canal haut débit de sa ligne d'abonné. Cette connexion fait suite à l'acceptation de la demande de visioconférence après réception sur le canal bas débit de l'adresse IP de l'ordinateur DVA. Cette connexion s'effectue par l'intermédiaire du fournisseur d'accès FAI_B de l'utilisateur B. Le fournisseur d'accès FAI_B attribue une adresse IP dynamique à l'ordinateur DVB. L'ordinateur DVB enregistre cette adresse IP.

Dans un cinquième temps T5, l'ordinateur DVB émet un appel pour une visioconférence à destination de l'ordinateur DVA en empruntant le canal haut débit de sa ligne d'abonné. Cet appel est adressé en utilisant l'adresse IP de l'ordinateur DVA. Une fois la visioconférence établie entre les ordinateurs, l'utilisateur A peut raccrocher son poste téléphonique TA, s'il est décroché, pour libérer l'appel téléphonique. Sinon, ce raccrochage de ligne peut être effectué automatiquement par l'ordinateur DVA.

Une fois la visioconférence établie, les utilisateurs A et B peuvent communiquer sur leur canal haut débit.

En cas de rupture soudaine de la session de visioconférence consécutive à un changement d'adresse IP ou à une déconnexion unilatérale du fait d'un des fournisseurs d'accès FAI-A ou FAI_B, le procédé peut être relancé automatiquement ou manuellement. Une relance automatique ou manuelle relance le processus à partir de la première phase. La relance peut être automatique car le dispositif déconnecté peut diagnostiquer de manière connue en soi l'origine de cette rupture.

La figure 4 est un schéma d'une troisième réalisation d'un procédé selon l'invention d'établissement d'un transfert de données, dans le cas d'une utilisation pour l'établissement d'une visioconférence.

Chaque utilisateur A, B dispose d'un ordinateur DVA, DVB et d'un poste téléphonique TA, TB. Pour chaque utilisateur A, respectivement B, le poste téléphonique TA, respectivement TB, est relié à un réseau téléphonique commuté RTC au moyen d'une ligne d'abonné de type xDSL. L'ordinateur DVA, respectivement DVB, est relié au réseau Internet, au moyen de la même ligne d'abonné que celle du poste téléphonique TA, respectivement TB, et par l'intermédiaire d'un fournisseur d'accès FAI_A, respectivement FAI_B. Le réseau Internet comprend un annuaire IP qui identifie un dispositif par son numéro de téléphone selon la norme ENUM. Sur chaque ligne d'abonné transitent un canal bas débit ou voie de parole et de signalisation et un canal haut débit ou voie de données.

Dans un premier temps T1, à sa mise en route, l'ordinateur DVA de l'utilisateur A, se connecte au réseau Internet via le canal haut débit de sa ligne d'abonné. Cette connexion s'effectue par l'intermédiaire du fournisseur d'accès FAI_A de l'utilisateur A. Le fournisseur d'accès FAI_A attribue une adresse IP dynamique à l'ordinateur DVA. L'ordinateur DVA enregistre cette adresse IP et l'inscrit dans l'annuaire ENUM.

Dans un deuxième temps T2, à sa mise en route, l'ordinateur DVB de l'utilisateur B, se connecte au réseau Internet via le canal haut débit de sa ligne d'abonné. Cette connexion s'effectue par l'intermédiaire du fournisseur d'accès FAI_B de l'utilisateur B. Le fournisseur d'accès FAI_B attribue une adresse IP dynamique à l'ordinateur DVB. L'ordinateur DVB enregistre cette adresse IP et l'inscrit dans l'annuaire ENUM.

Dans un troisième temps T3, l'ordinateur DVA invite l'ordinateur DVB à lire son adresse IP dans l'annuaire ENUM. L'invitation s'effectue sous la forme d'un appel émis sur le canal bas débit de la ligne d'abonné de l'utilisateur A. Cet appel résulte directement du décrochage du poste téléphonique TA et de la composition du numéro téléphonique de l'utilisateur B par l'utilisateur A ou bien du décrochage de ligne effectué par l'ordinateur DVA. Dans ce dernier cas, pour adresser le correspondant de l'utilisateur A, l'ordinateur DVA peut demander la saisie par l'utilisateur A du numéro de téléphone de l'utilisateur B. Ce numéro peut éventuellement être une valeur par défaut enregistrée par l'ordinateur DVA.

L'ordinateur DVB reçoit via le canal bas débit de sa ligne d'abonné, l'appel téléphonique émanant de l'ordinateur DVA. La réception de l'appel déclenche l'interrogation par l'ordinateur DVB de l'annuaire ENUM pour récupérer l'adresse IP de l'ordinateur DVA à partir du numéro de téléphone de l'appel entrant.

Dans un quatrième temps T4, l'ordinateur DVB peut déclencher une alerte pour prévenir l'utilisateur B d'une demande d'appel. L'utilisateur B peut choisir entre :
- répondre en vocal en décrochant son poste téléphonique TB. La communication s'effectue alors uniquement en phonie.
- répondre à la demande de visioconférence. Il active alors l'acceptation de visioconférence en cliquant par exemple sur un bouton d'activation du logiciel de visioconférence installé sur son ordinateur DVB. Dans ce cas, l'ordinateur DVB ne répond pas à l'appel sur le canal bas débit. Selon une variante, le logiciel de visioconférence installé sur l'ordinateur DVB peut être équipé d'un bouton qui permet de limiter l'usage de la visioconférence à l'échange de parole ce qui revient à de la téléphonie sur IP. Cette variante peut être combinée avec un autre bouton qui permet d'établir un échange d'images et de se placer dans une configuration de visioconférence avec échange d'images et de données audio.

Dans un cinquième temps T5, l'ordinateur DVB émet un appel pour une visioconférence à destination de l'ordinateur DVA en empruntant le canal haut débit de sa ligne d'abonné. Cet appel est adressé en utilisant l'adresse IP de l'ordinateur DVA. Une fois la visioconférence établie entre les ordinateurs, l'utilisateur A peut raccrocher son poste téléphonique TA, s'il est décroché, pour libérer l'appel téléphonique. Sinon, ce raccrochage de ligne peut être effectué automatiquement par l'ordinateur DVA. Une fois la visioconférence établie, les utilisateurs A et B peuvent communiquer sur leur canal haut débit.

En cas de rupture soudaine de la session de visioconférence consécutive à un changement d'adresse IP ou à une déconnexion unilatérale du fait d'un des fournisseurs d'accès FAI-A ou FAI_B, le procédé peut être relancé automatiquement ou manuellement. Une relance automatique ou manuelle relance le processus à partir de la première phase. La relance peut être automatique car le dispositif déconnecté peut diagnostiquer de manière connue en soi l'origine de cette rupture.

Les différentes réalisations précédemment décrites peuvent être combinées entre elles pour conduire à d'autres modes de réalisation.

La figure 5 est un schéma d'une réalisation particulière d'un dispositif de communication selon l'invention.

Le dispositif 5 de communication comprend un logiciel 6 d'émission/réception de données, un premier modem 7 bas débit, un deuxième modem 8 bas débit, un filtre 9, un moyen 10 logiciel pour le déroulement d'un procédé selon l'invention. Chacun des deux modems est relié à une même ligne 11 d'abonné sur laquelle transitent un canal de signalisation bas débit et un canal de données haut débit séparés par le filtre respectivement vers le premier modem bas débit et vers le deuxième modem haut débit.

Le dispositif 5 est typiquement composé d'un micro-ordinateur multimédia courant auquel sont ajoutés les moyens suivants :
- un premier modem RTC, bas débit,
- un deuxième modem ADSL, haut débit,
- un filtre ADSL externe au micro-ordinateur,
- un logiciel de visioconférence tel que E-CONF de la société France Télécom,
- un moyen logiciel adapté pour le déroulement d'un procédé selon l'invention, ce moyen pouvant être écrit en langage C en faisant appel à la bibliothèque de programmes tel que TAPI de la société Microsoft.

Le dispositif peut être complété avec une interface pour un téléphone analogique ou numérique et avec un bouton 12 d'activation du logiciel de visioconférence.

L'enchaînement des étapes d'un procédé selon l'invention peut différer de celui décrit en regard des figures 2 à 4. En particulier, la connexion à un réseau IP peut avoir été établie indépendamment du procédé d'établissement d'un transfert de données entre un premier et un deuxième dispositifs de communication. Dans ces conditions, le dispositif ne se reconnecte pas au réseau IP, le procédé récupère l'adresse IP déjà attribuée au dispositif.

Un procédé selon, l'invention peut être mise en oeuvre avec plus de deux dispositifs en fonction par exemple des possibilités du moyen logiciel d'émission/réception de données. En particulier, une visioconférence peut être mise en oeuvre avec trois dispositifs ; un premier dispositif établit un transfert de données avec un deuxième dispositif et avec un troisième dispositif. L'établissement du transfert de données entre le premier dispositif et chacun des autres dispositifs se déroule selon un procédé selon l'invention.

## Revendications

1. Procédé (1) d'établissement d'un transfert de données entre un premier (DVA, 5) et un deuxième (DVB) dispositifs de communication reliés entre eux au moyen d'un réseau de télécommunication comprenant un réseau IP et un réseau analogique, le premier dispositif (DVA, 5) étant équipé d'au moins un moyen (6) logiciel d'émission/réception de données transmises par le réseau, d'un premier moyen d'interface au réseau analogique (7) relié à une ligne (11) d'abonné du réseau de télécommunication sur laquelle transite un canal de signalisation et de parole et d'un deuxième moyen d'interface réseau (8) relié à une ligne (11) d'abonné du réseau de télécommunication sur laquelle transite un canal de données, **caractérisé en ce que** le procédé (1) comprend l'étape qui consiste :
- **en ce que** le premier dispositif (DVA, 5) émet (4) son adresse IP à destination du deuxième dispositif (DVB) au moyen du canal de signalisation et de parole en utilisant un mode de signalisation spécifique.

2. Procédé (1) d'établissement d'un transfert de données entre un premier (DVA, 5) et un deuxième (DVB) dispositifs de communication selon la revendication précédente, dans lequel le procédé (1) comprend en outre les étapes préalables qui consistent :
- en ce que le premier dispositif (DVA, 5) se connecte (2) par l'intermédiaire du canal de données à un réseau IP via un fournisseur d'accès (FAI_A),
- en ce que le premier dispositif (DVA, 5) enregistre (3) l'adresse IP dynamique fournie par le fournisseur d'accès (FAI_A) auquel il est connecté.

3. Procédé (1) d'établissement d'un transfert de données entre un premier (DVA, 5) et un deuxième (DVB) dispositifs de communication selon la revendication 1, qui comprend en outre l'étape qui consiste :
- en ce que le premier dispositif (DVA, 5) se met en attente sur le canal de données d'un appel du deuxième dispositif (DVB), appel adressé au moyen de l'adresse IP du premier dispositif (DVA, 5) dont dispose le deuxième dispositif (DVB).

4. Procédé (1) d'établissement d'un transfert de données entre un premier (DVA, 5) et un deuxième (DVB) dispositifs de communication selon la revendication 1, tel que l'émission d'adresse IP est effectuée par l'utilisation de fréquences vocales en mode DTMF dans une voie de parole du canal de signalisation et de parole, la ligne (11) d'abonné, reliée au premier moyen d'interface au réseau analogique, faisant partie d'un réseau analogique.

5. Procédé (1) d'établissement d'un transfert de données entre un premier (DVA, 5) et un deuxième (DVB) dispositifs de communication selon la revendication précédente, tel que l'adresse IP composée d'une série de chiffres est émise en mode DTMF sous la forme d'une séquence de doubles tonalités résultantes de la traduction en double fréquence de chaque chiffre.

6. Procédé (1) d'établissement d'un transfert de données entre un premier (DVA, 5) et un deuxième (DVB) dispositifs de communication selon la revendication 1, tel que l'émission d'adresse IP est effectuée par l'utilisation d'un mode de signalisation analogique de présentation du numéro et du nom, la ligne (11) d'abonné, reliée au premier moyen d'interface au réseau analogique, faisant partie d'un réseau analogique (PSTN) ayant une fonction présentation du numéro et du nom.

7. Procédé (1) d'établissement d'un transfert de données entre un premier (DVA, 5) et un deuxième (DVB) dispositifs de communication reliés entre eux au moyen d'un réseau de télécommunication comprenant un réseau IP et un réseau analogique, chacun des deux dispositifs (DVA, 5, DVB) étant équipé d'au moins un moyen (6) logiciel d'émission/réception de données, d'un premier moyen d'interface au réseau analogique (7) relié à une ligne (11) d'abonné du réseau de télécommunication sur laquelle transite un canal de signalisation et de parole et d'un deuxième moyen d'interface réseau (8) relié à une ligne (11) d'abonné du réseau de télécommunication sur laquelle transite un canal de données, **caractérisé en ce que** le procédé (1) comprend les étapes qui consistent :
- **en ce que** le premier dispositif (DVA, 5) se connecte (2) par l'intermédiaire de son canal de données à un réseau IP via un fournisseur d'accès (FAI_A),
- **en ce que** le premier dispositif (DVA, 5) enregistre (3) l'adresse dynamique fournie par le fournisseur d'accès (FAI_A) auquel il est connecté,
- **en ce que** le premier dispositif (DVA, 5) émet (4) son adresse IP à destination du deuxième dispositif (DVB) au moyen de son canal de signalisation et de parole en utilisant un mode de signalisation spécifique et, en réponse à l'émission de l'adresse IP du premier dispositif (DVA, 5) à destination du deuxième dispositif (DVB),
- **en ce que** le deuxième dispositif (DVB) se connecte (2) par l'intermédiaire de son canal de données à un réseau IP via un fournisseur d'accès (FAI_B),
- **en ce que** le deuxième dispositif (DVB) enregistre (3) l'adresse dynamique fournie par le fournisseur d'accès (FAI_B) auquel il est connecté,
- **en ce que** le deuxième dispositif (DVB) émet (4) son adresse IP à destination du premier dispositif (DVA, 5) au moyen de son canal de signalisation et de parole en utilisant un mode de signalisation spécifique et
- **en ce que** le premier dispositif (DVA, 5) émet sur son canal de données, à la demande de son moyen (6) logiciel d'émission/réception de données, un appel adressé au deuxième dispositif (DVB) au moyen de l'adresse IP de ce dernier dispositif (DVB).

8. Procédé (1) d'établissement d'un transfert de données entre un premier (DVA, 5) et un deuxième (DVB) dispositifs de communication reliés entre eux au moyen d'un réseau de télécommunication comprenant un réseau IP et un réseau analogique, chacun des deux dispositifs (DVA, 5, DVB) étant équipé d'au moins un moyen (6) logiciel d'émission/réception de données, d'un premier moyen d'interface au réseau analogique (7) relié à une ligne (11) d'abonné du réseau de télécommunication sur laquelle transite un canal de signalisation et de parole et d'un deuxième moyen d'interface réseau (8) relié à une ligne (11) d'abonné du réseau de télécommunication sur laquelle transite un canal de données, **caractérisé en ce que** le procédé (1) comprend les étapes qui consistent :
- **en ce que** chacun des deux dispositifs (DVA, 5, DVB) se connecte (2) par l'intermédiaire de son canal de données à un réseau IP via un fournisseur d'accès (FAI_A, FAI_B),
- **en ce que** chacun des deux dispositifs (DVA, 5, DVB) enregistre (3) l'adresse dynamique fournie par le fournisseur d'accès (FAI_A, FAI_B) auquel il est connecté,
- **en ce que** chacun des deux dispositifs (DVA, 5, DVB) échange avec l'autre dispositif son adresse IP au moyen de son canal de signalisation en utilisant un mode de signalisation spécifique et
- **en ce que** le premier dispositif (DVA, 5) émet sur son canal de données, à la demande de son moyen (6) logiciel d'émission/réception de données, un appel adressé au deuxième dispositif (DVB) au moyen de l'adresse IP de ce dernier dispositif (DVB).

9. Procédé (1) d'établissement d'un transfert de données entre un premier (DVA, 5) et un deuxième (DVB) dispositifs de communication selon l'une des revendications précédentes, le transfert de données étant établi entre les deux dispositifs (DVA, 5, DVB), qui comprend en outre l'étape qui consiste :
- en ce que la détection par le moyen (6) logiciel d'émission/réception de données d'une coupure dans le transfert de données déclenche la relance des étapes précédentes du procédé (1).

10. Dispositif (DVA, 5) de communication pour l'établissement d'un transfert de données avec un autre dispositif (DVB) de communication, équipé d'au moins un logiciel (6) d'émission/réception de données, d'un premier moyen d'interface à un réseau analogique (7) et d'un deuxième moyen d'interface réseau (8), chacun des deux moyens d'interface réseau (7, 8) étant relié à une même ligne (11) d'abonné sur laquelle transitent respectivement un canal de signalisation et de parole et un canal de données séparés par un filtre (9) respectivement vers le premier moyen d'interface à un réseau analogique (7) et vers le deuxième moyen d'interface réseau (8), **caractérisé en ce qu'**il comprend des moyens (10) logiciels pour le déroulement de l'étape qui consiste :
- **en ce que** le dispositif (DVA, 5) émet (4) son adresse IP à destination de l'autre dispositif (DVB) au moyen du canal de signalisation et de parole en utilisant un mode de signalisation spécifique.

11. Dispositif (DVA, 5) de communication pour l'établissement d'un transfert de données avec un autre dispositif (DVB) de communication, équipé d'au moins un logiciel (6) d'émission/réception de données, d'un premier moyen d'interface à un réseau analogique (7) et d'un deuxième moyen d'interface réseau (8), le premier moyen d'interface à un réseau analogique (7) étant relié à une première ligne d'abonné sur laquelle transite un canal de signalisation et de parole, le deuxième moyen d'interface réseau (8) étant relié à une deuxième ligne d'abonné sur laquelle transite un canal de données, **caractérisé en ce qu'**il comprend des moyens (10) logiciels pour le déroulement de l'étape qui consiste :
- **en ce que** le dispositif (DVA, 5) émet (4) son adresse IP à destination de l'autre dispositif (DVB) au moyen du canal de signalisation et de parole en utilisant un mode de signalisation spécifique.

12. Un produit programme d'ordinateur comprenant des portions de code logiciel pour l'exécution des étapes d'un procédé (1) selon l'une des revendications 1 à 18, lorsque le programme est exécuté par un dispositif informatique (DVA, 5).

13. Support utilisable dans un dispositif informatique (DVA, 5) et sur lequel est enregistré un produit programme d'ordinateur selon la revendication précédente.
